# EUROPÄISCHE PATENTSCHRIFT

(11) **EP 2 997 066 B1**
(45) Veröffentlichungstag und Bekanntmachung des Hinweises auf die Patenterteilung: **29.07.2020**
(21) Anmeldenummer: 14725102.9
(22) Anmeldetag: 14.05.2014
(51) Int. Cl.: C08G 18/48, C08G 18/66, C08G 18/72, B65G 39/00, C08G 18/32, C08G 18/12, C09J 175/08, C08L 97/00, C08G 18/20, C09J 5/00, C08G 18/79, B65D 81/32, B32B 9/00, B32B 7/12, B32B 27/38, B32B 27/18, B32B 27/12, B32B 15/04, B32B 43/00, B32B 37/12, B32B 17/06

(54) **STRUKTURELLER POLYURETHANKLEBSTOFF**
STRUCTURAL POLYURETHANE ADHESIVE
COLLE EN POLYURÉTHANE STRUCTURELLE

(30) Priorität: 15.05.2013 EP 13167922
(43) Veröffentlichungstag der Anmeldung: 23.03.2016
(73) Patentinhaber: Sika Technology AG, 6340 Baar (CH)
(72) Erfinder: KELCH, Steffen, CH-8102 Oberengstringen (CH); ROOCK, Wolfgang, 25482 Appen (DE); ITTRICH, Florian, 25421 Pinneberg (DE)
(74) Vertreter: Sika Patent Attorneys
(86) Internationale Anmeldenummer: PCT/EP2014/059895
(87) Internationale Veröffentlichungsnummer: WO 2014/184270

(56) Entgegenhaltungen:
- EP-A1- 0 504 681
- EP-A1- 2 468 789
- WO-A1-2009/058420
- US-A1- 2009 044 907

## Beschreibung

### Technisches Gebiet

Die Erfindung betrifft das Gebiet der zweikomponentigen Polyurethanklebstoffe, insbesondere der zähelastischen strukturellen Polyurethanklebstoffe,

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf Festigkeit und Anhaftungskräfte an solche Klebstoffe gestellt, da derartige Klebstoffe Elemente von Last tragenden Strukturen darstellen.

Die US 2009/044907A1 beschreibt zweikomponentige Polyurethanklebstoffe, welche eine geringe Änderung des G-Moduls über den Temperaturbereich zeigen, in dem diese Klebstoffe Anwendung finden. Das Dokument offenbart unter anderem eine NCO-reaktive Komponente umfassend Polyethertriol, Butandiol und Polyetherglycoldiamin,

Es besteht insbesondere der Wunsch nach Klebstoffen, die hohe Festigkeiten im Sinne struktureller Verklebungen und trotzdem eine hohe Dehnbarkeit über einen möglichst grossen Temperaturbereich verbunden mit einer wenig ausgeprägten Abhängigkeit der mechanischen Eigenschaften von der Temperatur aufweisen. Zudem sollen die Klebstoffe möglichst schnell eine gewisse Festigkeit aufbauen, also schon belastbar sein, bevor sie vollständig ausgehärtet sind, sodass verklebte Teile schon früh bewegt werden können, oder die Klebeverbindung fixierende Einrichtungen schon früh entfernt werden können. Diese Eigenschaft wird auch als "hohe Frühfestigkeit" bezeichnet. Die Klebstoffe sollen weiterhin sowohl bei Umgebungstemperatur als auch in einem durch Wärme beschleunigten Aushärtungsprozess zur Endfestigkeit gehärtet werden können und eine gute Haftung auf metallischen und nichtmetallischen Substraten zeigen.

Weiter besteht ein Bedarf nach Klebstoffen, welche vorgehend genannte Eigenschaften erfüllen und zusätzlich durch eine spezifische Behandlung leicht vom Substrat gelöst werden können, respektive Verklebungen basierend auf ausgehärteten Klebstoffen gelöst werden können, ohne dass durch diese Behandlung die Substrate, beispielsweise durch hohe mechanische oder thermische Belastung, Schaden nehmen.

### Darstellung der Erfindung

Aufgabe der vorliegenden Erfindung ist es daher, einen zweikomponentigen Polyurethanklebstoff zur Verfügung zu stellen, welcher über eine hohe Festigkeit und eine hohe Dehnbarkeit bei einer nur schwach ausgeprägten Abhängigkeit der mechanischen Eigenschaften von der Temperatur verfügt und eine hohe Frühfestigkeit aufweist und sich damit hervorragend als struktureller Klebstoff eignet.

Überraschenderweise wird diese Aufgabe mit dem erfindungsgemässen Polyurethanklebstoff gelöst. Es wurde überraschenderweise festgestellt, dass der erfindungsgemässe Polyurethanklebstoff durch die Verwendung entweder eines Poly(trimethylenoxid)diols oder eines Poly(tetramethylenoxid)diols als Bestandteil der Polyolkomponente eine erhöhte Frühfestigkeit und eine besonders gute Haftung, insbesondere auf metallischen Oberflächen und glasfaser- oder kohlefaserverstärkten Kunststoffen, aufweist. Dies zeigt sich insbesondere an hohen Werten für die Zugscherfestigkeit zu einem frühen Zeitpunkt nach dem Verkleben und an hohen Werten für die Zugscherfestigkeit von vollständig ausgehärteten Verklebungen. Überraschenderweise wird bei der Verwendung eines Poly(trimethylenoxid)diols zusätzlich eine besonders geringe Temperaturabhängigkeit des Elastizitätsmoduls beobachtet.

Darüber hinaus erlaubt die Zusammensetzung unter Verwendung eines Poly(trimethylenoxid)diols oder eines Poly(tetramethylenoxid)diols eine gezielte thermische Degradation des Klebstoffs bei Anwendung einer Temperatur von ≥ 120 °C, insbesondere 140 °C - 200 °C für ≥ 10 min, insbesondere ≥ 20 min, was bei Bedarf zum gezielten Entkleben genutzt werden kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft einen Polyurethanklebstoff bestehend aus einer Polyolkomponente **K1** und einer Polyisocyanatkomponente **K2;** wobei
die Polyolkomponente **K1**
- mindestens ein Triol **A1** mit einem mittleren Molekulargewicht im Bereich von 1'000 bis 10'000 g/mol,
- mindestens ein Diol **A2** mit zwei primären Hydroxylgruppen und einem Molekulargewicht im Bereich von 60 bis 150 g/mol,
- mindestens ein Diol **A3** mit einem mittleren Molekulargewicht im Bereich von 200 bis 3000 g/mol, welches entweder ein Poly(trime-thylenoxid)diol oder ein Poly(tetramethylenoxid)diol darstellt, und
- mindestens ein aliphatisches Polyamin **PA** mit einem Molekulargewicht im Bereich von 60 bis 500 g/mol umfasst; und
die Polyisocyanatkomponente **K2**
- mindestens ein Polyisocyanat **B1** und
- mindestens ein Isocyanatgruppen aufweisendes Polyurethanpolymer **B2** umfasst;
wobei das Triol **A1**, das Diol **A2** und das Diol **A3** in einer solchen Menge vorhanden sind, dass das Gewichtsverhältnis von **(A1+A3)/A2** im Bereich von 2.5 bis 20, bevorzugt 3 bis 15, insbesondere 4 bis 10, liegt, und das Gewichtsverhältnis von **A1/A3** im Bereich von 2 bis 100, bevorzugt 3 bis 75, insbesondere 4 bis 50, liegt,
wobei als mittleres Molekulargewicht das zahlenmittlere Molekulargewicht Mₙ einer oligomeren oder polymeren Mischung von Molekülen bezeichnet wird, welches üblicherweise mittels GPC gegen Polystyrol als Standard bestimmt wird.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Als "Offenzeit" wird in diesem Dokument die Zeit bezeichnet, innerhalb welcher die zu verklebenden Teile gefügt sein müssen, nachdem die Komponenten vermischt sind.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul), insbesondere im Dehnungsbereich 0.05 bis 0.25 %, gemeint sind.
Als "Entkleben" einer Klebeverbindung wird im vorliegenden Dokument die gezielte Schwächung des Klebstoffs in Bezug auf dessen Festigkeit bezeichnet. Dadurch wird die mechanische Trennung der Substrate mit relativ geringem Kraftaufwand ermöglicht, d.h. die Klebeverbindung gut lösbar. Die Trennung kann entweder adhäsiv zwischen Klebstoff und einer Substratoberfläche oder kohäsiv im Klebstoff erfolgen.

Als "Raumtemperatur" wird im vorliegenden Dokument eine Temperatur von 23 °C bezeichnet.

Als Triol **A1** geeignet ist insbesondere ein Polyoxyalkylentriol, auch Polyethertriol genannt. Dies sind Polymerisationsprodukte von Ethylenoxid, 1,2-Propylenoxid, 1,2- oder 2,3-Butylenoxid oder Mischungen davon. Typischerweise sind sie polymerisiert mit Hilfe eines Startermoleküls mit drei aktiven Wasserstoffatomen wie beispielsweise Glycerin, 1,1,1-Trimethylolethan, 1,1,1-Trimethylolpropan oder Mischungen davon.

Bevorzugt als Triol **A1** sind Polyoxypropylentriole, Polyoxyethylentriole und Polyoxypropylen-Polyoxyethylen-Triole.

Besonders bevorzugt weist das Triol **A1** primäre Hydroxylgruppen, am meisten bevorzugt ausschliesslich primäre Hydroxylgruppen, auf.

Besonders bevorzugt als Triol **A1** sind sogenannte "EO-endcapped" (ethylene oxide-endcapped) Polyoxypropylentriole. Dies sind spezielle Polyoxypropylenpolyoxyethylentriole, die beispielsweise dadurch erhalten werden, dass reine Polyoxypropylentriole nach Abschluss der Polypropoxylierung mit Ethylenoxid weiter alkoxyliert werden und dadurch primäre Hydroxylgruppen aufweisen. Gegenüber reinen Polyoxyethylentriolen weisen sie den Vorteil auf, dass sie weniger hydrophil und bei Raumtemperatur flüssig sind.

Das Triol **A1** weist bevorzugt eine mittlere OH-Funktionalität im Bereich von 2.2 bis 3 auf. Mit solchen Triolen **A1** werden Klebstoffe mit guten mechanischen Eigenschaften erhalten.

Das Triol **A1** weist bevorzugt ein mittleres Molekulargewicht im Bereich von 3'000 bis 8'000 g/mol, besonders bevorzugt von 4'000 bis 6'000 g/mol, am meisten bevorzugt von 4'500 bis 5'000 g/mol, auf. Ein solches Triol weist eine gute Kombination aus hoher Funktionalität und Kettenlänge auf, sodass damit ein Klebstoff mit guten mechanischen Eigenschaften erhalten wird.

Das Triol **A1** wird bevorzugt in einer Menge von 30 bis 60 Gew.-% bezogen auf das Gesamtgewicht der Polyolkomponente **K1** eingesetzt.

Die Polyolkomponente **K1** umfasst weiterhin mindestens ein Diol **A2** mit zwei primären Hydroxylgruppen und einem Molekulargewicht im Bereich von 60 bis 150 g/mol. Diole mit einem Molekulargewicht von mehr als 150 g/mol führen im ausgehärteten Zustand zu eine deutlich geringeren Festigkeiten.

Das Diol **A2** wird bevorzugt in einer Menge von 2 bis 15 Gew.-% bezogen auf die Polyolkomponente **K1** eingesetzt.

Als Diol **A2** geeignet sind insbesondere 1,2-Ethandiol, 1,3-Propandiol, 1,4-Butandiol, 1,5-Pentandiol, 1,6-Hexandiol, 1,3-Cyclohexandimethanol, 1,4-Cyclohexandimethanol und Diethylenglykol. Diese Diole weisen primäre, sterisch kaum gehinderte Hydroxylgruppen auf, welche mit Isocyanatgruppen besonders reaktiv sind.

Besonders bevorzugt handelt es sich beim Diol **A2** um ein lineares Diol, insbesondere ausgewählt aus der Gruppe bestehend aus 1,3-Propandiol, 1,4-Butandiol und 1,5-Pentandiol. Diese Diole sind besonders gut handhabbar, da sie kaum hydrophil und bei Raumtemperatur flüssig sind, und sie bilden bei der Aushärtung des Klebstoffes an Urethanbindungen reiche Kettensegmente aus, was hohe Festigkeiten bei guter Dehnbarkeit über einen weiten Temperaturbereich begünstigt. Davon besonders bevorzugt sind 1,4-Butandiol und 1,5-Pentandiol, am meisten bevorzugt ist 1,4-Butandiol.

Die Polyolkomponente **K1** umfasst weiterhin mindestens ein Diol **A3** mit einem mittleren Molekulargewicht im Bereich von 200 bis 3000 g/mol, welches entweder ein Poly(trimethylenoxid)diol oder ein Poly(tetramethylen-oxid)diol darstellt.

Solche Diole **A3** sind dahingehend von Vorteil, dass der Klebstoff dadurch über eine schwach ausgeprägte Abhängigkeit der mechanischen Eigenschaften von der Temperatur bei Temperaturwerten von - 35 °C bis 85 °C verfügt, insbesondere in Bezug auf das E-Modul, die Zugfestigkeit und die Bruchdehnung, besonders in der Gesamtsicht dieser Eigenschaften. Weiter sind solche Diole **A3** einer hohen Zugscherfestigkeit zu einem frühen Zeitpunkt nach dem Verkleben, insbesondere nach 1 bis 5 Stunden, bevorzugt nach 3 Stunden, zuträglich.

Das Diol **A3** weist bevorzugt ein mittleres Molekulargewicht im Bereich von 800 bis 2200 g/mol auf. Mit einem solchen Diol **A3** werden besonders hohe Dehnungen bei hoher Festigkeit erhalten.

Das Diol **A3** stellt in einer Ausführungsform der Erfindung bevorzugt ein Poly(trimethylenoxid)diol dar. Dies ist dahingehend von Vorteil, dass der Klebstoff über eine besonders geringe Temperaturabhängigkeit des E-Moduls verfügt.

Ein geeignetes Poly(trimethylenoxid)diol besteht vorzugsweise zu ≥ 90 Gew.-%, insbesonderezu ≥ 95 Gew.-%, aus einem Polymerisationsprodukt von Oxetan oder aus einem Polykondensationsprodukt von 1,3-Propandiol. Solche Poly(trimethylenoxid)diole können insbesondere hergestellt werden durch Polykondensation, insbesondere säurekatalysierte Polykondensation, von 1,3-Propandiol oder durch eine Ringöffnungspolymerisation von Oxetan, insbesondere eine kationische Ringöffnungspolymerisation von Oxetan.

Vorzugsweise handelt es sich beim Poly(trimethylenoxid)diol um ein Poly(trimethylenoxid)diol der Formel (I), 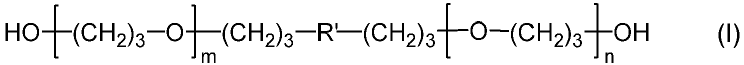 wobei
m und n jeweils unabhängig voneinander für 1 bis 30 stehen und derart gewählt sind, dass das Poly(trimethylenoxid)diol ein mittleres Molekulargewicht im Bereich von 200 bis 3000 g/mol, insbesondere 800 bis 2200 g/mol, aufweist, und
R' ein organisches Polyol mit zwei OH-Gruppen, insbesondere zwei primären OH-Gruppen, nach Entfernung der zwei OH-Gruppen, darstellt, vorzugsweise ausgewählt aus der Gruppe bestehend aus 1,3-Propandiol, 1,4-Butandiol und Ethylenglykol, insbesondere 1,3-Propandiol oder Ethylenglykol, am meisten bevorzugt 1,3-Propandiol.

Das Diol **A3** stellt in einer weiteren Ausführungsform der Erfindung bevorzugt ein Poly(tetramethylenoxid)diol dar. Dies ist dahingehend von Vorteil, dass der Klebstoff über eine besonders hohe Frühfestigkeit verfügt, was sich insbesondere in hohen Werten für die Zugscherfestigkeit nach einem frühen Zeitpunkt nach dem Verkleben zeigt.

Ein geeignetes Poly(tetramethylenoxid)diol besteht vorzugsweise zu ≥ 90 Gew.-%, insbesonderezu ≥ 95 Gew.-%, aus einem Polymerisationsprodukt von Tetrahydrofuran oder einem Polykondensationsprodukt von 1,4-Butandiol. Solche Poly(tetramethylenoxid)diole können beispielsweise hergestellt werden durch Polykondensation, insbesondere säurekatalysierte Polykondensation, von 1,4-Butandiol oder durch eine Ringöffnungspolymerisation von Tetrahydrofuran.

Vorzugsweise handelt es sich beim Poly(tetramethylenoxid)diol um ein Poly(tetramethylenoxid)diol der Formel (II), 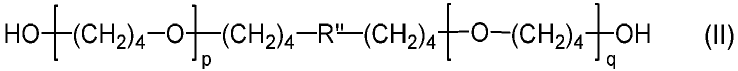 wobei
p und q jeweils unabhängig voneinander für 1 bis 20 stehen und derart gewählt sind, dass das Poly(tetramethylenoxid)diol ein mittleres Molekulargewicht im Bereich von 200 bis 3000 g/mol, insbesondere 800 bis 2200 g/mol, aufweist, und
R" ein organisches Polyol mit zwei OH-Gruppen, insbesondere zwei primären OH-Gruppen, nach Entfernung der zwei OH-Gruppen, darstellt, vorzugsweise ausgewählt aus der Liste bestehend aus 1,3-Propandiol 1,4-Butandiol und Ethylenglykol, insbesondere 1,4-Butandiol und Ethylenglykol, am meisten bevorzugt 1 ,4-Butandiol.

Vorzugsweise beträgt der Anteil an Diol **A3** 0.5 bis 20 Gew.-%, bevorzugt 1 bis 15 Gew.-%, insbesondere 1 bis 10 Gew.-%, bezogen auf die Polyolkomponente **K1.**

Das Triol **A1,** das Diol **A2** und das Diol **A3** sind im Klebstoff in einer solchen Menge vorhanden, dass das Gewichtsverhältnis **(A1+A3)/A2** im Bereich von 2.5 bis 20 liegt. Ein solcher Klebstoff zeigt eine hohe Festigkeit bei hoher Dehnbarkeit und eine geringe Abhängigkeit des Elastizitätsmoduls von der Temperatur. Bevorzugt liegt das Gewichtsverhältnis von **(A1+A3)/A2** im Bereich von 3 bis 15, insbesondere im Bereich von 4 bis 10. Bei einem solchen Klebstoff sind die Werte für die Dehnbarkeit in einem besonders interessanten Bereich für die Anwendung als struktureller Klebstoff.

Das Triol **A1** und das Diol **A3** sind im Klebstoff in einer solchen Menge vorhanden, dass das Gewichtsverhältnis **A1/A3** im Bereich von 2 bis 100, bevorzugt 3 bis 75, insbesondere 4 bis 50, liegt.

Falls es sich bei dem Diol **A3** um ein Poly(trimethylenoxid)diol handelt, ist dieses Gewichtsverhältnis **A1/A3** insbesondere einem temperaturunabhängigen E-Modul zuträglich.

Falls es sich bei dem Diol **A3** um ein Poly(tetramethylenoxid)diol handelt, ist dieses Gewichtsverhältnis **A1/A3** insbesondere einer hohen Zugscherfestigkeit im ausgehärteten Zustand bei tiefen Temperaturen und bei Raumtemperatur zuträglich.

Die Polyolkomponente **K1** umfasst weiterhin mindestens ein aliphatisches Polyamin **PA** mit einem Molekulargewicht im Bereich von 60 bis 500 g/mol, vorzugsweise 60 bis 240 g/mol.

Als aliphatisches Polyamin **PA** geeignet sind Amine mit zwei oder drei aliphatischen Aminogruppen, insbesondere die folgenden handelsüblichen Polyamine:
- aliphatische, cycloaliphatische oder arylaliphatische primäre Diamine, wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, 1,4-Diamino-2,2,6-trimethylcyclohexan (TMCDA), Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,8-Menthandiamin und 1,3- und 1,4-Bis-(aminomethyl)benzol;
- Ethergruppen-haltige aliphatische primäre Diamine, wie insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Di-oxadodecan-3,10-diamin, 4,7,10-Trioxatridecan-1,13-diamin und höhere Oligomere dieser Diamine, 3,9-Bis-(3-aminopropyl)-2,4,8,10-tetraoxaspiro[5.5]-undecan, Bis-(3-aminopropyl)polytetrahydrofurane und andere Polytetrahydrofurandiamine, Jeffamine® RFD-270 (von Huntsman), sowie Polyoxyalkylendiamine ("Polyether-Diamine"). Letztere stellen Produkte aus der Aminierung von Polyoxyalkylendiolen dar und sind beispielsweise erhältlich unter dem Namen Jeffamine® (von Huntsman), unter dem Namen Polyetheramin (von BASF) oder unter dem Namen PC Amine® (von Nitroil). Insbesondere geeignete Polyoxyalkylendiamine sind Jeffamine® D-230, Jeffamine® D-400, Polyetheramin D 230, Polyetheramin D 400, PC Amine® DA 250 und PC Amine® DA 400; und
- Polyoxyalkylentriamine ("Polyether-Triamine"), welche Produkte aus der Aminierung von Polyoxyalkylentriolen darstellen und beispielsweise erhältlich sind unter dem Handelsnamen Jeffamine® (von Huntsman), unter dem Namen Polyetheramin (von BASF) oder unter dem Namen PC Amine® (von Nitroil), wie insbesondere Jeffamine® T-403, Polyetheramin T403, und PC Amine® TA 403.

Besonders bevorzugt ist das Polyamin **PA** ausgewählt aus der Gruppe bestehend aus 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan,1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3-Bis-(aminomethyl)benzol und 1,4-Bis-(aminomethyl)benzol.

Diese Polyamine sind besonders gut zugänglich und führen in einer sehr schnellen Reaktion mit Isocyanaten zu Harnstoffgruppen, welche besonders effizient ein Netzwerk, das auf Wasserstoffbrückenbindungen basiert, ausbilden, was zu einem schnellen Anstieg der Viskosität führen und so wirksam ein Abfliessen des Klebstoffes vom Substrat verhindern kann. Damit hergestellte Klebstoffe weisen besonders hohe Festigkeiten, insbesondere hohe Elastizitätsmoduli, und eine wenig ausgeprägte Abhängigkeit der mechanischen Eigenschaften von der Temperatur auf.

Davon bevorzugt sind 1,3-Bis-(aminomethyl)cyclohexan und 1,3-Bis-(aminomethyl)benzol, am meisten bevorzugt ist 1,3-Bis-(aminomethyl)benzol. Mit diesen Polyaminen entstehen ausgehärtete Klebstoffe mit ganz besonders hohen Festigkeiten.

Das aliphatische Polyamin **PA** wird bevorzugt in einer Menge von 0.1 bis 3 Gew.-% bezogen auf das Gesamtgewicht der Polyolkomponente **K1** eingesetzt. Ein solcher Klebstoff ist besonders gut verarbeitbar. Er zeigt eine schnelle Standfestigkeit ohne dass die Offenzeit zu kurz ist.

Ein besonders bevorzugter Polyurethanklebstoff enthält eine Polyolkomponente **K1,** umfassend
- mindestens ein Triol **A1** mit einem mittleren Molekulargewicht im Bereich von 1'000 bis 10'000 g/mol, insbesondere 3000 - 8000 g/mol, bevorzugt in einer Menge von 30 bis 60 Gew.-%, wobei es sich insbesondere um ein sogenanntes "EO-endcapped" (ethylene oxide-endcapped) Polyoxypropylentriol handelt;
- mindestens ein Diol **A2** mit zwei primären Hydroxylgruppen und einem Molekulargewicht im Bereich von 60 bis 150 g/mol, bevorzugt in einer Menge von 2 bis 15 Gew.-%, wobei es sich bevorzugt um 1,4-Butandiol oder 1,5-Pentandiol handelt;
- mindestens ein Diols **A3** mit einem mittleren Molekulargewicht im Bereich von 200 bis 3000 g/mol, insbesondere 800 bis 2200 g/mol, welches entweder ein Poly(trimethylenoxid)diol oder ein Poly(tetramethy-lenoxid)diol darstellt, bevorzugt in einer Megen von 0.5 bis 20 Gew.-%; und
- mindestens ein aliphatisches Polyamin **PA** mit einem Molekulargewicht im Bereich von 60 bis 500 g/mol, bevorzugt in einer Menge von 0.1 bis 3 Gew.-%, wobei es sich bevorzugt um ein aliphatisches Polyamin ausgewählt aus der Gruppe bestehend aus 1,5-Diamino-2-methylpen-tan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxa-dodecan-3,10-diamin, 1,3-Bis-(aminomethyl)benzol und 1,4-Bis-(aminomethyl)benzol handelt;
wobei das Gewichtsverhältnis von **(A1+A3)/A2** im Bereich von 2.5 bis 20, bevorzugt 3 bis 15, insbesondere 4 bis 10, liegt;
und das Gewichtsverhältnis von **A1/A3** bevorzugt im Bereich von 2 bis 100, bevorzugt 3 bis 75, insbesondere 4 bis 50, liegt.

Dabei sind die genannten Gewichtsprozente bezogen auf die gesamte Polyolkomponente **K1.**

Die Polyisocyanatkomponente **K2** umfasst mindestens ein Polyisocyanat **B1.**

Als Polyisocyanat **B1** geeignet sind insbesondere monomere Di- oder Triisocyanate, sowie Oligomere, Polymere und Derivate von monomeren Di- oder Triisocyanaten, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3-und -1,4-xylylendiisocyanat (m- und p-TMXDI), Bis-(1-Isocyanato-1-methyl-ethyl)naphthalin, Dimer- und Trimerfettsäureisocyanate wie 3,6-Bis-(9-isocya-natononyl)-4,5-di-(1-heptenyl)cyclohexen (Dimeryldiisocyanat) und α ,α,α',α',α",α"-Hexamethyl-1,3,5-mesitylentriisocyanat.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur® N 100 und N 3200 (von Bayer), Tolonate® HDB und HDB-LV (von Rhodia) und Duranate® 24A-100 (von Asahi Kasei); HDI-Isocyanurate, wie Desmodur® N 3300, N 3600 und N 3790 BA (alle von Bayer), Tolonate® HDT, HDT-LV und HDT-LV2 (von Rhodia), Duranate® TPA-100 und THA-100 (von Asahi Kasei) und Coronate® HX (von Nippon Polyurethane); HDI-Uretdione wie Desmodur® N 3400 (von Bayer); HDI-Iminooxadiazindione wie Desmodur® XP 2410 (von Bayer); HDI-Allophanate wie Desmodur® VP LS 2102 (von Bayer); IPDI-Isocyanurate, wie beispielsweise in Lösung als Desmodur® Z 4470 (von Bayer) oder in fester Form als Vestanat® T1890/ 100 (von Degussa); TDI-Oligomere wie Desmodur® IL (von Bayer); sowie gemischte Isocyanurate auf Basis TDI/HDI, zum Beispiel als Desmodur® HL (von Bayer). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur® CD, Desmodur® PF, Desmodur® PC (alle von Bayer) oder Isonate® M 143 (von Dow), sowie Gemische aus MDI und MDI-Homologen (polymeres MDI oder PMDI), erhältlich unter Handelsnamen wie Desmodur® VL, Desmodur® VL50, Desmodur® VL R10, Desmodur® VL R20, Desmodur® VH 20 N und Desmodur® VKS 20F (alle von Bayer), Isonate® M 309, Voranate® M 229 und Voranate® M 580 (alle von Dow) oder Lupranat® M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt als Polyisocyanat **B1** sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gewichts-%, insbesondere 60 bis 90 Gewichts-%.

Besonders bevorzugt als Polyisocyanat **B1** sind polymeres MDI und insbesondere bei Raumtemperatur flüssige MDI-Typen, welche Anteile von MDI-Carbodiimiden oder deren Addukten enthalten.

Mit diesen Polyisocyanaten **B1** werden besonders gute Verarbeitungseigenschaften und besonders hohe Festigkeiten erhalten.

Die Polyisocyanatkomponente **K2** umfasst weiterhin mindestens ein Isocyanatgruppen aufweisendes Polyurethanpolymer **B2.**

Das Polyurethanpolymer **B2** weist bevorzugt 50 bis 95 Massenprozente, insbesondere 70 bis 90 Massenprozente, Polyoxyalkyleneinheiten, besonders bevorzugt Polyoxyethylen- und/oder Polyoxypropyleneinheiten, insbesondere Polyoxypropyleneinheiten, auf. Ein solches Polyurethanpolymer weist eine tiefe Viskosität auf und ermöglicht eine gute Dehnbarkeiten.

Das Polyurethanpolymer **B2** weist bevorzugt ein mittleres Molekulargewicht im Bereich von 1'000 bis 20'000 g/mol, besonders bevorzugt 2'000 bis 10'000 g/mol, auf.

Das Polyurethanpolymer **B2** weist bevorzugt eine mittlere NCO-Funktionalität im Bereich von 1.7 bis 3, insbesondere von 1.8 bis 2.5, auf. Ein solches Polyurethanpolymer ermöglicht gute Verarbeitungseigenschaften und gute mechanische Eigenschaften im ausgehärteten Zustand.

Besonders bevorzugt weist das Polyurethanpolymer **B2** eine mittlere NCO-Funktionalität im Bereich von 2.05 bis 2.5 auf. Ein solches Polyurethanpolymer ermöglicht besonders gute Dehnbarkeiten bei hoher Festigkeit.

Das Polyurethanpolymer **B2** weist bevorzugt einen Gehalt an freien Isocyanatgruppen von 1 bis 10 Gewichts-%, besonders bevorzugt von 1 bis 5 Gewichts-%, auf.

Ein geeignetes Isocyanatgruppen aufweisendes Polyurethanpolymer **B2** ist erhältlich aus der Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO / OH-Verhältnis" wird das Verhältnis der Anzahl der eingesetzten Isocyanatgruppen zu der Anzahl der eingesetzten Hydroxylgruppen verstanden.

Als Polyol zur Herstellung eines Polyurethanpolymers **B2** sind insbesondere die folgenden handelsüblichen Polyole oder Mischungen davon geeignet:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole.
   Ganz besonders geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Speziell geeignet sind sogenannte Ethylenoxid-terminierte ("EO-endcapped", ethylene oxide-endcapped) Polyoxypropylenpolyole.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol zur Herstellung eines Polyurethanpolymers **B2** bevorzugt sind Polyoxyalkylenpolyole, Polyesterpolyole, Polycarbonatpolyole und Polyacrylatpolyole. Besonders bevorzugt sind Polyoxyalkylenpolyole, insbesondere Polyoxypropylenpolyole und Polyoxyethylen-Polyoxypropylen-Mischpolyole.

Das Polyol zur Herstellung eines Polyurethanpolymers **B2** weist bevorzugt ein mittleres Molekulargewicht im Bereich von 500 bis 20'000 g/mol, insbesondere 1'000 bis 8'000 g/mol, auf.

Das Polyol zur Herstellung eines Polyurethanpolymers **B2** ist bevorzugt ein Diol oder eine Mischung aus mindestens einem Diol und mindestens einem Triol, insbesondere eine Mischung aus mindestens einem Diol und mindestens einem Triol.

Als Polyisocyanat zur Herstellung eines Polyurethanpolymers **B2** sind insbesondere die folgenden handelsüblichen Polyisocyanate oder Mischungen davon geeignet:
2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), 1,3,5-Tris-(isocyanatomethyl)benzol, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI) und m- und p-Tetramethyl-1,3- und -1,4-xylylendiisocyanat (mund p-TMXDI). Bevorzugt sind MDI, TDI, IPDI und HDI. Besonders bevorzugt ist MDI.

Am meisten bevorzugt ist 4,4'-Diphenylmethandiisocyanat.

Vorzugsweise ist das Isocyanatgruppen aufweisende Polyurethanpolymer **B2** erhältlich aus der Umsetzung von 4,4'-Diphenylmethandiisocyanat mit mindestens einem Polyol. Damit werden bei der Aushärtung des Klebstoffes besonders wirksame Hartsegmente und somit besonders hohe Festigkeiten erhalten.

Vorzugsweise handelt es sich beim Polyisocyanat **B1** und dem zur Herstellung des Polyurethanprepolymers **B2** verwendeten Polyisocyanat um einen unterschiedlichen Typ Polyisocyanat.

Besonders bevorzugt handelt es sich beim Polyisocyanat **B1** um ein bei Raumtemperatur flüssiges MDI und beim zur Herstellung des Polyurethanpolymers **B2** verwendeten Polyisocyanat um 4,4'-Diphenylmethandiisocyanat, welches bei Raumtemperatur typischerweise fest ist. Damit ist die zweite Komponente bei Raumtemperatur flüssig, was eine einfache Verarbeitung ermöglicht, und es werden besonders gute mechanische Eigenschaften erreicht. Eine definierte Mischung aus Polyisocyanat **B1** und Polyurethanpolymer **B2** lässt sich dadurch erreichen, dass das Polyurethanpolymer **B2** vorgängig separat hergestellt wird, bevor es mit dem Polyisocyanat **B1** vermischt wird.

Bevorzugt erfolgt die Herstellung das Polyurethanpolymers **B2** somit nicht in Anwesenheit des Polyisocyanates **B1.**

Vorzugsweise beträgt das Gewichtsverhältnis zwischen dem Polyisocyanat **B1** und dem Polyurethanpolymer **B2** 0.25 bis 4, bevorzugt 0.25 bis 2, besonders bevorzugt 0.3 bis 1.5, und insbesondere 0.4 bis 1.0. Eine solche Polyisocyanatkomponente **K2** ermöglicht Klebstoffe mit guter Verarbeitbarkeit, hoher Festigkeit und hoher Dehnung.

Ein besonders bevorzugter Polyurethanklebstoff enthält eine Polyisocyanatkomponente **K2,** umfassend
- 20 bis 60 Gew.-% von mindestens einem Polyisocyanat **B1**, wobei es sich bevorzugt um eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten handelt, und
- 30 bis 70 Gew.-% von mindestens einem Isocyanatgruppen aufweisenden Polyurethanpolymer **B2,** wobei dessen Urethangruppen und freie Isocyanatgruppen bevorzugt abgeleitet sind von 4,4'-Diphenylmethandiisocyanat.

Dabei sind die genannten Gewichtsprozente bezogen auf die gesamte Polyisocyanatkomponente **K2.**

Der Polyurethanklebstoff kann als Bestandteil der Polyolkomponente **K1** zusätzlich weitere mit Isocyanatgruppen reaktionsfähige Substanzen enthalten. Insbesondere kann die Polyolkomponente **K1** mindestens ein Polyol und/oder mindestens einen niedrigmolekularen zwei- oder mehrwertigen Alkohol enthalten, welche zur Herstellung des Polyurethanpolymers **B2** genannt wurden.

Weiterhin kann der Polyurethanklebstoff Katalysatoren enthalten, die die Reaktion von Hydroxylgruppen mit Isocyanatgruppen beschleunigen, insbesondere Zinn-, Zink- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]-undec-7-en (DBU). Zur Erzielung einer Wärmeaktivierung können insbesondere die tertiären Amine, Amidine oder Guanidine mit Phenol oder Carbonsäuren, insbesondere phenolischen oder sonstigen aromatischen Carbonsäuren, reversibel ein Salz bilden, das bei Erhöhung der Temperatur zersetzt wird.

Weiterhin kann der Polyurethanklebstoff weitere Bestandteile, wie sie der Fachmann aus der Zweikomponenten-Polyurethanchemie her kennt, enthalten. Diese können in nur einer Komponente oder in beiden vorhanden sein. Als derartig zusätzliche Bestandteile können insbesondere Lösungsmittel, Weichmacher und/oder Extender, Füllstoffe wie insbesondere Russe, Kreiden oder Schichtsilikate, weiterhin Pigmente, Rheologiemodifizierer wie insbesondere amorphe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel, vorhanden sein.

Die Polyolkomponente **K1** und die Polyisocyanatkomponente **K2** werden vorteilhaft derart formuliert, dass ihr Mischungsverhältnis in Volumen im Bereich von 1:3 und 3:1, insbesondere 1:2 und 2:1, liegt. Besonders bevorzugt liegt es im Bereich von 0.8 : 1.2.

Das Mischungsverhältnis zwischen den Komponenten **K1** und **K2** ist vorzugsweise derart, dass im vermischten Polyurethanklebstoff das Verhältnis zwischen der Anzahl Isocyanatgruppen und der Anzahl gegenüber Isocyanaten reaktiven Gruppen, insbesondere die Summe aus OH- und NH₂-Gruppen, vor der Aushärtung ungefähr im Bereich von 1.2 bis 1, bevorzugt 1.15 bis 1.05, liegt.

Die Herstellung der beiden Komponenten **K1** und **K2** erfolgt getrennt voneinander und, zumindest für die Polyisocyanatkomponente **K2,** unter Ausschluss von Feuchtigkeit. Die Komponenten **K1** und **K2** werden typischerweise jeweils in einem eigenen Gebinde gelagert. Die weiteren Bestandteile des Polyurethanklebstoffs können als Bestandteil der Polyolkomponente **K1** oder der Polyisocyanatkomponente **K2** vorhanden sein, wobei gegenüber Isocyanatgruppen reaktive weitere Bestandteile bevorzugt ein Bestandteil der Polyolkomponente **K1** sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten **K1** und **K2** sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die Polyolkomponente **K1** und die Polyisocyanatkomponente **K2** werden vor der Anwendung des Klebstoffs getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die Polyolkomponente **K1** beziehungsweise die Polyisocyanatkomponente **K2** des Polyurethanklebstoffs enthält.

Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammeröffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für Anwendungen in grösseren Mengen, insbesondere für Anwendungen in der industriellen Fertigung, werden die beiden Komponenten vorteilhaft in Fässer oder Hobbocks abgefüllt und gelagert. Bei der Anwendung werden die Komponenten über Förderpumpen ausgepresst und über Leitungen einer Mischapparatur, wie sie üblicherweise für Zweikomponentenklebstoffe in der industriellen Fertigung verwendet wird, zudosiert.

Das Mischen erfolgt typischerweise über Statikmischer oder mit Hilfe von dynamischen Mischern. Beim Mischen ist darauf zu achten, dass die Polyolkomponente **K1** und die Polyisocyanatkomponente **K2** möglichst homogen vermischt werden. Werden die zwei Komponenten schlecht gemischt, treten lokale Abweichungen vom vorteilhaften Mischungsverhältnis auf, was sich in einer Verschlechterung der mechanischen Eigenschaften auswirken kann. Um die Mischqualität visuell zu kontrollieren kann es vorteilhaft sein, wenn die beiden Komponenten zwei unterschiedliche Farben aufweisen. Eine gute Vermischung liegt dann vor, wenn der vermischte Klebstoff eine homogene Mischfarbe aufweist, ohne sichtbare Streifen oder Schlieren.

Beim Kontakt der Polyolkomponente **K1** mit Isocyanatgruppen der Polyisocyanatkomponente **K2** beginnt die Aushärtung durch chemische Reaktion. Dabei reagieren die Aminogruppen des Polyamins **PA** und die Hydroxylgruppen des Triols **A1** des Diols **A2** und des Diols **A3** und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet der Polyurethanklebstoff zu einem festen Material aus. Dieser Vorgang wird auch als Vernetzung bezeichnet.

Ein weiterer Gegenstand der Erfindung ist somit auch ein ausgehärteter Polurethanklebstoff, erhalten aus der Aushärtung eines Polyurethanklebstoffs wie im vorliegenden Dokument beschrieben.

Ein weiterer Aspekt der vorliegenden Erfindung betrifft ein Verfahren zum Verkleben von einem ersten Substrat mit einem zweiten Substrat, welches die Schritte umfasst:
- Mischen der vorgängig beschriebenen Polyolkomponente **K1** und Polyisocyanatkomponente **K2,**
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.

Dabei können die beiden Substrate aus dem gleichen oder unterschiedlichen Materialien bestehen.

In diesem Verfahren zum Verkleben sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesem Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis.

Die Substrate können bei Bedarf vordem Applizieren des Klebstoffs vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Weiter kann es vorteilhaft sein, wenn das Verfahren nach dem Schritt des Aushärtens des Polyurethanklebstoffs einen weiteren Schritt
- Erwärmen des ausgehärteten Polyurethanklebstoffs zur Aufhebung der Verklebung aufweist.

Vorzugsweise wird die Erwärmung bei einer Temperatur von ≥ 120 °C, insbesondere 140 °C - 200 °C, insbesondere bevorzugt von 150 - 160 °C ausgeführt für eine Zeit ≥ 10 min, insbesondere ≥ 20 min, insbesondere bevorzugt von 20 -40 min, am meisten bevorzugt von 20 - 40 min.

Die Erwärmung findet insbesondere mittels Infrarotstrahler, Warmluftföhn, Induktionsheizgerät oder in einem Ofen statt.

Die Erwärmung führt zu einer, zumindest teilweisen, Zerstörung des ausgehärteten Polyurethanklebstoffs. Nach der Erwärmung kann die Verklebung leicht durch Ablösen der verklebten Substrate voneinander, respektive durch Ablösen der verklebten Substrate von dem vorgehend erwärmten ausgehärteten Polyurethanklebstoff, leicht, typischerweise mit wenig Kraftaufwand pro Klebefläche wie beispielsweise mit weniger als 2.0 MPa, insbesondere mit 1.5 - 0.2 MPa, rückgängig gemacht werden.

Dies ist insbesondere im Falle einer Reparatur eines verklebten Werkstücks vorteilhaft, da dadurch durch Erhitzen des ausgehärteten Polyurethanklebstoffs beschädigte oder fehlerhafte verklebte Substrate leicht gezielt ausgetauscht werden können. So kann beispielsweise bei einem Fahrzeug, dessen Teile mit einem erfindungsgemässen Klebstoff verbunden wurden, die Klebstellen der einzelnen Fügeteile gezielt erwärmt werden, beispielsweise mit einem Heissluftföhn oder über IR-Lampen oder beim Vorliegen metallischer Substrate über Induktion. So können einzelne Fügeteile durch Aufhebung der Verklebung mittels Erwärmung vom Fahrzeug entfernt werden, ohne dass die Verklebungen der übrigen Fügeteile beeinträchtigt werden. Da dies ohne grossen Kraftaufwand möglich ist, nehmen auch die übrigen Formteile keinen Schaden.

So betrifft die Erfindung in einem weiteren Aspekt ein Verfahren zum thermisch induzierten Entkleben über eine gezielte thermische Degradation des Klebstoffs durch Anwendung einer Temperatur von 120 °C - 200 °C für 10 - 50 min, bevorzugt durch Anwendung einer Temperatur von 150 °C - 160 °C für 20 - 40 min und Ablösung eines vorgehend beschriebenen Polyurethanklebstoffs.

Aus diesem beschriebenen Verfahren zum Verkleben entsteht ein Artikel, bei welchem der Klebstoff zwei Substrate miteinander verbindet.

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Besonders bevorzugt wird der erfindungsgemässe Polyurethanklebsoff verwendet für das Verkleben von einem ersten Substrat mit einem zweiten Substrat, wobei zumindeste das erste Substrat einen glasfaserverstärkten Kunststoff oder einen kohlefaserverstärkten Kunststoff oder ein Thermosets auf Epoxybasis oder eine Glasmineralfasermatte darstellt.

Solche Verklebungen sind insbesondere ein Bestandteil von sogenannten Leichtbaufahrzeugen, also Fahrzeugen, deren Karrosserie zumindest teilweise aus glasfaserverstärktem Kunststoff oder kohlefaserverstärktem Kunststoff besteht. Das zweite Substrat kann dabei insbesondere einen glasfaserverstärkten Kunststoff, einen kohlefaserverstärkten Kunststoff, einen Stahl, einen mit KTL beschichteten Stahl, ein Aluminium oder einen Kunststoff darstellen.

Solche Verklebungen sind weiterhin insbesondere ein Bestandteil von Sandwichelementen für sogenannte Leichtbaustrukturen, welche mobil oder stationär sein können. Dabei stellt das erste Substrat insbesondere eine Glasmineralfasermatte dar.

Der beschriebene Polyurethanklebstoff weist sehr gute Eigenschaften als struktureller Klebstoff auf.

Als struktureller Klebstoff wird hierbei ein Klebstoff bezeichnet, welcher im ausgehärteten Zustand einen Teil der tragenden Struktur der verklebten Bauteile bildet. Der strukturelle Klebstoff ist somit ein wichtiges Bindeglied der Konstruktion, innerhalb welcher er zwei Bauteile bzw. Substrate verbindet. An seine mechanischen Eigenschaften werden dementsprechend hohe Anforderungen gestellt.

Eine weitere wichtige Eigenschaft eines strukturellen Klebstoffs ist seine gute Verarbeitbarkeit. Dabei sollen die beiden Komponenten einzeln und beim Vermischen eine niedrige Viskosität aufweisen, sodass sie gut förderbar und mischbar sind, dann aber sehr schnell eine solche Viskosität aufbauen, dass unmittelbar ein strukturviskoses, standfestes Material erhalten wird, sodass Schichtdicken von bis zu 10 Millimetern und mehr dimensionsstabil aufgetragen werden können.

Mit dem beschriebenen Polyurethanklebstoff sind diese Anforderungen besonders gut erfüllbar.

### Beispiele

### verwendete Substanzen:

| Polyisocyanat | modifiziertes Diphenylmethandiisocyanat enthaltend MDI-Carbodiimid-Addukte, bei Raumemperatur flüssig, NCO-Gehalt 29.4 Gewichts-% (Isonate® M 143 von Dow) |
|---|---|
| Triol | EO-endcapped Polyoxypropylentriol, OH-Zahl 35.0 mg KOH/g (Voranol® CP 4755 von Dow) |
| 1,4-Butandiol | 1,4-Butandiol von lyondellbasell |
| Diol-1 | Poly(trimethylenoxid)diol, mittleres Molekulargewicht ca. 2400 g/mol, OH-Zahl 42 mg KOH/g (Cerenol H2400 von DuPont) |
| Diol-2 | Poly(tetramethylenoxid)diol, mittleres Molekulargewicht ca. 2000 g/mol, OH-Zahl 56 mg KOH/g (PolyTHF® 2000 von BASF) |
| MXDA | 1,3-Bis-(aminomethyl)benzol |
| DABCO | 1,4-Diazabicyclo[2.2.2]octan, 33.0 Gewichts-% in Dipropylenglykol (DABCO 33 LV® von Air Products) |
| Zeolith | Sylosiv® A3 von Grace |
| Talk | Glomaxx LL von Imerys |
| Kieselsäure | hydrophob modifizierte pyrogene Kieselsäure |

Das **Polymer-1** wurde hergestellt, indem 1300 g Polyoxypropylen-Diol (Acclaim® 4200 N von Bayer; OH-Zahl 28.5 mg KOH/g), 2600 g Polyoxypropylenpolyoxyethylen-Triol (Caradol® MD34-02 von Shell; OH-Zahl 35.0 mg KOH/g), 600 g 4,4'-Methylendiphenyldiisocyanat (Desmodur® 44 MC L von Bayer) und 500 g Diisodecylphthalat nach bekanntem Verfahren bei 80 °C zu einem NCO-terminierten Polyurethanpolymer mit einem Gehalt an freien Isocyanat-Gruppen von 2.1 Gewichts-% umgesetzt wurden.

### Herstellung von Polyurethanklebstoffen

Für jeden Klebstoff wurden die in der Tabelle 1 angegebenen Inhaltsstoffe in den angegebenen Mengen (in Gewichtsteilen) der Polyolkomponente **K1** mittels eines Vakuumdissolvers unter Feuchtigkeitsausschluss zu einer homogenen Paste verarbeitet und aufbewahrt. Ebenso wurden die in der Tabelle 1 angegebenen Inhaltsstoffe der Polyisocyanatkomponente **K2** verarbeitet und aufbewahrt. Anschliessend wurden die beiden Komponenten im angegebenen Mischungsverhältnis **K2/K1** (in Gewichtsteilen, w/w) mittels einem SpeedMixer® (DAC 150 FV, Hauschild) während 30 Sekunden zu einer homogenen Paste verarbeitet und diese unverzüglich folgendermassen geprüft:

Zur Bestimmung der mechanischen Eigenschaften wurde der Klebstoff in Hantelform gemäss ISO 527, Teil 2, 1B, gebracht und während 24 h bei 25°C und anschliessend während 3h bei 80°C gelagert bzw. ausgehärtet.

Nach einer Konditionierungszeit von 24h bei der in der Tabelle 2 angegebenen Temperatur (- 35 °C bzw. 23 °C bzw. 85 °C) wurden das Elastizitätsmodul im Bereich von 0.05 bis 0.25 % Dehnung ("**E-Modul")** die **Zugfestigkeit** und die **Bruchdehnung** der so hergestellten Probekörper gemäss ISO 527 auf einer Zwick Z020 Zugprüfmaschine bei der jeweils in der Tabelle angegebenen Temperatur und einer Prüfgeschwindigkeit von 50 mm/ min gemessen.

Zur Messung der **Zugscherfestigkeit** wurden diverse Prüfkörper hergestellt, wobei der Klebstoff jeweils 1 Minute nach Abschluss der Mischzeit zwischen zwei mit Isopropanol entfetteten KTL-lackierten Stahlblechen in einer Schichtdicke von 2 mm und auf einer überlappenden Klebefläche 15 x 45 mm aufgebracht wurde. An diesen Prüfkörpern wurde die Zugscherfestigkeit nach DIN EN 1465 bestimmt, wobei die Prüfkörper vor der Messung unterschiedlich gelagert waren: entweder, als Mass für die Frühfestigkeit, für 1 h bei 23 °C oder für 3 h bei 23 °C und gemessen bei 23 °C; oder, zur Messung der Zugscherfestigkeit im vollständig ausgehärteten Zustand, für 12 h bei 23 °C und anschliessend für 3 h bei 80°C und dann 24 h bei -35 °C bzw. 23 °C bzw. 85 °C, gemessen bei -35 °C bzw. 23 °C bzw. 85 °C. Diese Messungen im vollständig ausgehärteten Zustand sind in der Tabelle 2 als "ausgehärtet" bezeichnet. Die Angaben (af), (cf) und (acf) bezeichnen dabei jeweils das Bruchbild, wobei "af" für ein adhäsives Bruchbild, "cf" für ein kohäsives Bruchbild und "acf" für ein gemischt adhäsives und kohäsives Bruchbild stehen.

Die Resultate sind in der Tabelle 2 angegeben.

Die Angaben **(A1+A3)/A2** und **A1/A3** in der Tabelle 1 beziehen sich auf die Gewichtsverhältnisse der vorhandenen Triole **A1,** Diole **A2** und Diole **A3** im jeweiligen Klebstoff.

Bei **Rf.1** handelt es sich um ein Vergleichsbeispiel, bei ***Z-1*** bis ***Z-10*** handelt es sich um erfindungsgemässe Beispiele.

**Tabelle 1**

| **Beispiele** | | ***Rf.1*** | ***Z-1*** | ***Z-2*** | ***Z-3*** | ***Z-4*** | ***Z-5*** | ***Z-6*** | ***Z-7*** | ***Z-8*** | ***Z-9*** | ***Z-10*** |
|---|---|---|---|---|---|---|---|---|---|---|---|---|
| Polyolkomponente **K1:** | | | | | | | | | | | | |
| | Triol | 52.2 | 52.0 | 50.0 | 48.0 | 52.0 | 43.0 | 52.0 | 50.0 | 48.0 | 52.0 | 43.0 |
| | 1,4-Butandiol | 7.4 | 7.5 | 7.5 | 7.5 | 5.0 | 7.5 | 7.5 | 7.5 | 7.5 | 5.0 | 7.5 |
| | Diol-1 | - | 1.0 | 3.0 | 5.0 | 5.0 | 10.0 | - | - | - | - | - |
| | Diol-2 | - | - | - | - | - | - | 1.0 | 3.0 | 5.0 | 5.0 | 10.0 |
| | MXDA | 2.0 | 1.8 | 1.8 | 1.8 | 1.8 | 1.8 | 1.8 | 1.8 | 1.8 | 1.8 | 1.8 |
| | DABCO | 0.2 | 0.2 | 0.2 | 0.2 | 0.2 | 0.2 | 0.2 | 0.2 | 0.2 | 0.2 | 0.2 |
| | Talk | 33.3 | 33.5 | 33.5 | 33.5 | 32.0 | 33.5 | 33.5 | 33.5 | 33.5 | 32.0 | 33.5 |
| | Zeolith | 4.9 | 4.0 | 4.0 | 4.0 | 4.0 | 4.0 | 4.0 | 4.0 | 4.0 | 4.0 | 4.0 |
| | (**A1+A3**)/**A2** | 7.1 | 7.1 | 7.1 | 7.1 | 11.4 | 7.1 | 7.1 | 7.1 | 7.1 | 11.4 | 7.1 |
| | **A1/A3** | - | 52 | 16.7 | 9.6 | 10.4 | 4.3 | 52 | 16.7 | 9.6 | 10.4 | 4.3 |

| Polyisocyanatkomponente **K2:** | | | | | | | | | | | | |
|---|---|---|---|---|---|---|---|---|---|---|---|---|
| | Polyisocyanat | 39.5 | 39.5 | 39.5 | 39.5 | 39.5 | 39.5 | 39.5 | 39.5 | 39.5 | 39.5 | 39.5 |
| | Polymer-1 | 56.5 | 56.5 | 56.5 | 56.5 | 56.5 | 56.5 | 56.5 | 56.5 | 56.5 | 56.5 | 56.5 |
| | Kieselsäure | 4.0 | 4.0 | 4.0 | 4.0 | 4.0 | 4.0 | 4.0 | 4.0 | 4.0 | 4.0 | 4.0 |
| | **K2/K1** (w/w) | 0.84 | 0.84 | 0.84 | 0.84 | 0.64 | 0.85 | 0.84 | 0.84 | 0.85 | 0.64 | 0.85 |

**Tabelle 2**

| **Beispiele** | ***Rf.1*** | ***Z-1*** | ***Z-2*** | ***Z-3*** | ***Z-4*** | ***Z-5*** | ***Z-6*** | ***Z-7*** | ***Z-8*** | ***Z-9*** | ***Z-10*** |
|---|---|---|---|---|---|---|---|---|---|---|---|
| **E-Modul** [MPa] | | | | | | | | | | | |
| -35 °C | 196 | 166 | 117 | 146 | 80 | 85 | 186 | 244 | 178 | 118 | 194 |
| 23 °C | 52 | 35 | 34 | 36 | 23 | 33 | 50 | 56 | 50 | 25 | 46 |
| 85 °C | 21 | 23 | 20 | 21 | 14 | 21 | 27 | 23 | 25 | 17 | 28 |

| **Zugfestigkeit** [MPa] | | | | | | | | | | | |
|---|---|---|---|---|---|---|---|---|---|---|---|
| -35 °C | 34 | 28 | 25 | 30 | 34 | 25 | 35 | 38 | 37 | 36 | 36 |
| 23 °C | 13 | 10 | 11 | 10 | 10 | 11 | 13 | 13 | 13 | 11 | 12 |
| 85 °C | 6 | 6 | 6 | 7 | 6 | 7 | 6 | 7 | 7 | 6 | 6 |

| **Bruchdehnung** [%] | | | | | | | | | | | |
|---|---|---|---|---|---|---|---|---|---|---|---|
| -35 °C | 233 | 191 | 210 | 210 | 249 | 230 | 170 | 162 | 191 | 256 | 206 |
| 23 °C | 234 | 200 | 208 | 203 | 212 | 228 | 194 | 196 | 182 | 199 | 183 |
| 85 °C | 98 | 98 | 116 | 127 | 106 | 125 | 85 | 96 | 95 | 93 | 100 |

| **Zugscherfestigkeit** [MPa] | | | | | | | | | | | |
|---|---|---|---|---|---|---|---|---|---|---|---|
| 1h 23 °C | 0.4 (af) | 0.9 (acf) | 0.6 (acf) | 0.5 (af) | 2.0 (cf) | 0.5 (af) | 1.2 (cf) | 1.0 (acf) | 0.6 (acf) | 0.7 (acf) | 1.0 (cf) |
| 3h 23 °C | 2.7 (cf) | 3.6 (cf) | 3.5 (cf) | 3.0 (cf) | 4.7 (cf) | 2.8 (cf) | 3.5 (cf) | 4.2 (cf) | 3.2 (cf) | 2.8 (acf) | 3.1 (cf) |
| ausgehärtet, | | | | | | | | | | | |
| - 35 °C | 13.6 | 14.0 | 14.0 | 13.9 | 14.6 | 13.7 | 13.5 | 13.6 | 13.8 | 13.9 | 13.9 |
| ausgehärtet, | | | | | | | | | | | |
| 23 °C | 9.6 | 10.0 | 9.8 | 9.7 | 8.4 | 9.2 | 9.6 | 9.8 | 9.7 | 8.2 | 9.3 |
| ausgehärtet, | | | | | | | | | | | |
| 85 °C | 4.4 | 4.3 | 4.3 | 4.0 | 3.3 | 4.2 | 4.1 | 4.1 | 4.2 | 3.8 | 4.0 |

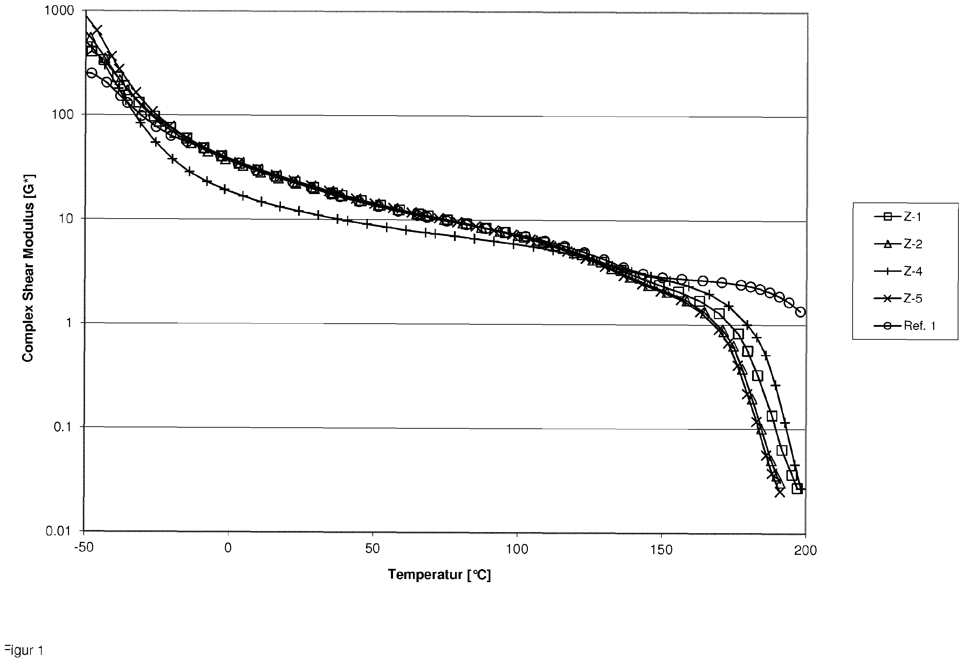

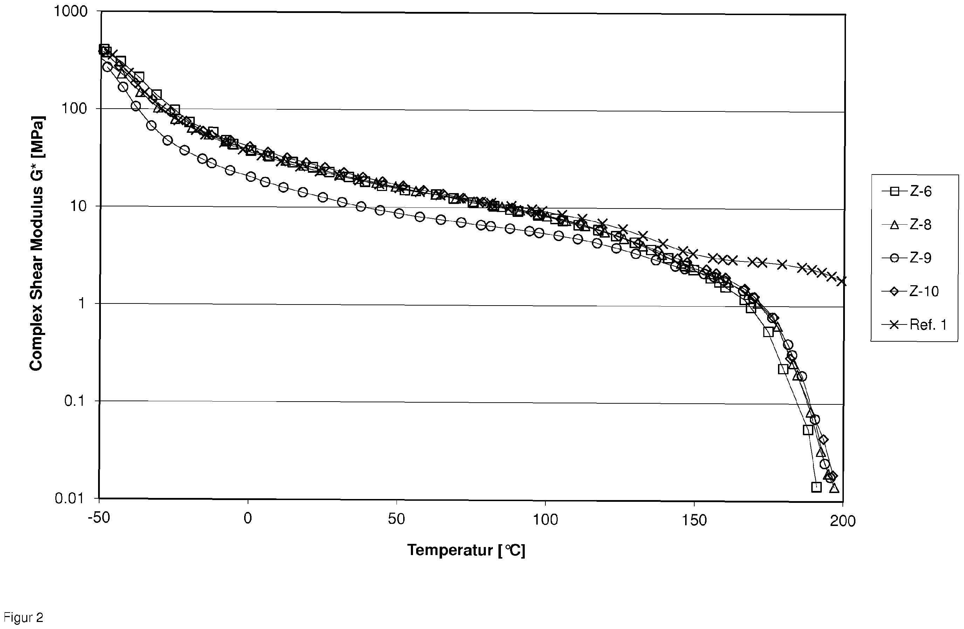

Die DMTA Messungen, welche in den Figuren 1 und 2 gezeigt sind, wurden durchgeführt mit einem Mettler DMA/SDTA 861e. Die Messbedingungen waren: Messung in Scherung, 10 Hz Anregungsfrequenz und 5 K/min Aufheizrate. Als Probekörper dienten scheibenförmige Proben (Dicke 2-3 mm, Durchmesser 10 mm) von 7 Tagen im Normklima (23 °C, 50 % relative Feuchtigkeit) ausgehärteten Filmen. Diese wurden auf - 60 °C abgekühlt und dann mit einer Aufheizrate von 5K/min bis auf 200 °C erwärmt und der komplexe Schermodul G* [MPa] bestimmt.

## Patentansprüche

1. Polyurethanklebstoff bestehend aus einer Polyolkomponente **K1** und einer Polyisocyanatkomponente **K2;** wobei
die Polyolkomponente **K1**
- mindestens ein Triol **A1** mit einem mittleren Molekulargewicht im Bereich von 1'000 bis 10'000 g/mol,
- mindestens ein Diol **A2** mit zwei primären Hydroxylgruppen und einem Molekulargewicht im Bereich von 60 bis 150 g/mol,
- mindestens ein Diol **A3** mit einem mittleren Molekulargewicht im Bereich von 200 bis 3000 g/mol, welches entweder ein Poly(trimethylenoxid)diol oder ein Poly(tetramethylenoxid)diol darstellt, und
- mindestens ein aliphatisches Polyamin **PA** mit einem Molekulargewicht im Bereich von 60 bis 500 g/mol umfasst; und
die Polyisocyanatkomponente **K2**
- mindestens ein Polyisocyanat **B1** und
- mindestens ein Isocyanatgruppen aufweisendes Polyurethanpolymer **B2** umfasst;
wobei das Triol **A1,** das Diol **A2** und das Diol **A3** in einer solchen Menge vorhanden sind, dass das Gewichtsverhältnis von **(A1+A3)/A2** im Bereich von 2.5 bis 20, bevorzugt 3 bis 15, insbesondere 4 bis 10, liegt, und das Gewichtsverhältnis von **A1/A3** im Bereich von 2 bis 100, bevorzugt 3 bis 75, insbesondere 4 bis 50, liegt,
wobei als mittleres Molekulargewicht das zahlenmittlere Molekulargewicht Mₙ einer oligomeren oder polymeren Mischung von Molekülen bezeichnet wird, welches üblicherweise mittels GPC gegen Polystyrol als Standard bestimmt wird.

2. Polyurethanklebstoff gemäss Anspruch 1, **dadurch gekennzeichnet, dass** das Triol **A1** ein Polyethertriol ist.

3. Polyurethanklebstoff gemäss einem der vorhergehenden Ansprüche, **dadurch gekennzeichnet, dass** das Triol **A1** primäre Hydroxylgruppen aufweist.

4. Polyurethanklebstoff gemäss einem der vorhergehenden Ansprüche, **dadurch gekennzeichnet, dass** das Triol **A1** ein mittleres Molekulargewicht im Bereich von 3'000 bis 8'000 g/mol aufweist.

5. Polyurethanklebstoff gemäss einem der vorhergehenden Ansprüche, **dadurch gekennzeichnet, dass** das Diol **A3** ein Poly(trimethylenoxid)diol darstellt.

6. Polyurethanklebstoff gemäss einem der Ansprüche 1 bis 4, **dadurch gekennzeichnet, dass** das Diol **A3** ein Poly(tetramethylenoxid)diol darstellt.

7. Polyurethanklebstoff gemäss einem der vorhergehenden Ansprüche, **dadurch gekennzeichnet, dass** das Polyamin **PA** ausgewählt ist aus der Gruppe bestehend aus 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1,0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3- Bis-(aminomethyl)benzol und 1,4-Bis-(aminomethyl)benzol.

8. Polyurethanklebstoff gemäss einem der vorhergehenden Ansprüche, **dadurch gekennzeichnet, dass** das Polyisocyanat **B1** eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten ist.

9. Polyurethanklebstoff gemäss einem der vorhergehenden Ansprüche, **dadurch gekennzeichnet, dass** das Isocyanatgruppen aufweisende Polyurethanpolymer **B2** erhältlich ist aus der Umsetzung von 4,4'-Diphenylmethandiisocyanat mit mindestens einem Polyol.

10. Polyurethanklebstoff gemäss einem der vorhergehenden Ansprüche, **dadurch gekennzeichnet, dass** das Mischungsverhältnis in Volumen zwischen der Polyolkomponente **K1** und der Polyisocyanatkomponente **K2** im Bereich von 1:3 und 3:1, bevorzugt 0.8 : 1.2, liegt.

11. Verfahren zum Verkleben von einem ersten Substrat mit einem zweiten Substrat, umfassend die Schritte
- Mischen der Polyolkomponente **K1** und der Polyisocyanatkomponente **K2** eines Polyurethanklebstoffs gemäss einem der Ansprüche 1 bis 10,
- Applizieren des vermischten Polyurethanklebstoffs auf mindestens eine der zu verklebenden Substratoberflächen,
- Fügen der zu verklebenden Substrate innerhalb der Offenzeit
- Aushärten des Polyurethanklebstoffs.

12. Verfahren gemäss Anspruch 11, **dadurch gekennzeichnet, dass** eines oder beide Substrate ein Metall oder eine Glaskeramik oder ein Glas oder ein glasfaserverstärkter Kunststoff oder ein kohlefaserverstärkter Kunststoff oder ein Thermoset auf Epoxybasis ist.

13. Artikel entstanden aus dem Verfahren zum Verkleben gemäss einem der Ansprüche 11 oder 12.

14. Verfahren zum thermisch induzierten Entkleben über eine thermische Degradation durch Anwendung einer Temperatur von 120 °C - 200 °C für 10 - 50 min, bevorzugt durch Anwendung einer Temperatur von 150 °C - 160 °C für 20 - 40 min und Ablösung eines ausgehärteten Polyurethanklebstoffs gemäss einem der Ansprüche 1 bis 10.

15. Verwendung des Polyurethanklebstoffs gemäss einem der Ansprüche 1 bis 10 für das Verkleben von einem ersten Substrat mit einem zweiten Substrat, wobei zumindest das erste Substrat einen glasfaserverstärkten Kunststoff oder einen kohlefaserverstärkten Kunststoff oder ein Thermoset auf Epoxybasis oder eine Glasmineralfasermatte darstellt.

## Claims

1. Polyurethane adhesive consisting of a polyol component **K1** and a polyisocyanate component **K2;** wherein
the polyol component **K1** comprises
- at least one triol **A1** with an average molecular weight in the range from 1,000 to 10,000 g/mol,
- at least one diol **A2** having two primary hydroxy groups and a molecular weight in the range from 60 to 150 g/mol,
- at least one diol **A3** with an average molecular weight in the range from 200 to 3000 g/mol, which is either a poly(trimethylene oxide) diol or a poly(tetramethylene oxide) diol, and
- at least one aliphatic polyamine **PA** with a molecular weight in the range from 60 to 500 g/mol; and
the polyisocyanate component **K2** comprises
- at least one polyisocyanate **B1** and
- at least one isocyanate group-containing polyurethane polymer **B2**;
wherein the triol **A1,** the diol **A2** and the diol **A3** are present in such a quantity that the weight ratio of **(A1+A3)/A2** is in the range from 2.5 to 20, preferably 3 to 15, in particular 4 to 10, and the weight ratio of **A1/A3** is in the range from 2 to 100, preferably 3 to 75, in particular 4 to 50,
wherein the average molecular weight referred to is the number-average molecular weight Mₙ of an oligomeric or polymeric mixture of molecules, which is typically determined by means of GPC against polystyrene as standard.

2. Polyurethane adhesive according to Claim 1, **characterized in that** the triol **A1** is a polyether triol.

3. Polyurethane adhesive according to any one of the preceding claims, **characterized in that** the triol **A1** has primary hydroxy groups.

4. Polyurethane adhesive according to any one of the preceding claims, **characterized in that** the triol **A1** has an average molecular weight in the range from 3,000 to 8,000 g/mol.

5. Polyurethane adhesive according to any one of the preceding claims, **characterized in that** the diol **A3** is a poly(trimethylene oxide) diol.

6. Polyurethane adhesive according to any one of Claims 1 to 4, **characterized in that** the diol **A3** is a poly(tetramethylene oxide) diol.

7. Polyurethane adhesive according to any one of the preceding claims, **characterized in that** the polyamine **PA** is selected from the group consisting of 1,5-diamino-2-methylpentane, 2,2,4- and 2,4,4-trimethylhexamethylenediamine, 1,8-octanediamine, 1,10-decanediamine, 1,12-dodecanediamine, 1-amino-3-aminomethyl-3,5,5-trimethylcyclohexane, 2- and 4-methyl-1,3-diaminocyclohexane and mixtures thereof, 1,3-bis(aminomethyl)cyclohexane, 1,4-bis(aminomethyl)cyclohexane, 2,5(2,6)-bis(aminomethyl)bicyclo[2.2.1]heptane, 3(4),8(9)-bis(aminomethyl)tricyclo[5.2.1.0^{2,6}]decane, bis(2-aminoethyl) ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 1,3-bis(aminomethyl)benzene and 1,4-bis(aminomethyl)benzene.

8. Polyurethane adhesive according to any one of the preceding claims, **characterized in that** the polyisocyanate **B1** is a form of 4,4'-, 2,4'- or 2,2'-diphenylmethane diisocyanate that is liquid at room temperature and any desired mixtures of these isomers (MDI) in the form of polymeric MDI or MDI with fractions of oligomers or derivatives.

9. Polyurethane adhesive according to any one of the preceding claims, **characterized in that** the isocyanate group-containing polyurethane polymer **B2** can be obtained from the reaction of 4,4'-diphenylmethane diisocyanate with at least one polyol.

10. Polyurethane adhesive according to any one of the preceding claims, **characterized in that** the mixing ratio by volume between the polyol component **K1** and the polyisocyanate component **K2** is in the range from 1:3 to 3:1, preferably 0.8:1.2.

11. Method for bonding a first substrate to a second substrate, comprising the steps of
- mixing the polyol component **K1** and the polyisocyanate component **K2** of a polyurethane adhesive according to any one of Claims 1 to 10,
- applying the mixed polyurethane adhesive to at least one of the substrate surfaces to be bonded,
- fitting the substrates to be bonded together within the open time
- curing the polyurethane adhesive.

12. Method according to Claim 11, **characterized in that** one or both substrate(s) is/are a metal or a glass ceramic or a glass or a glass fibre-reinforced plastic or a carbon fibre-reinforced plastic or an epoxy-based thermoset.

13. Article resulting from the bonding method according to either of Claims 11 and 12.

14. Method for the thermally induced release of adhesion by thermal degradation by applying a temperature of 120°C-200°C for 10-50 min, preferably by applying a temperature of 150°C-160°C for 20-40 min and detaching a cured polyurethane adhesive according to any one of Claims 1 to 10.

15. Use of the polyurethane adhesive according to any one of Claims 1 to 10 for bonding a first substrate to a second substrate, wherein at least the first substrate is a glass fibre-reinforced plastic or a carbon fibre-reinforced plastic or an epoxy-based thermoset or a glass mineral fibre mat.

## Revendications

1. Adhésif de polyuréthane constitué d'un composant de polyol K1 et d'un composant de polyisocyanate K2 ;
le composant de polyol K1 comprenant
- au moins un triol A1 doté d'un poids moléculaire moyen dans la plage de 1 000 à 10 000 g/mole,
- au moins un diol A2 doté de deux groupes hydroxyle primaires et d'un poids moléculaire dans la plage de 60 à 150 g/mole,
- au moins un diol A3 doté d'un poids moléculaire moyen dans la plage de 200 à 3 000 g/mole, qui représente soit un poly(oxyde de triméthylène)diol ou un poly(oxyde de tétraméthylène)diol, et
- au moins une polyamine aliphatique PA dotée d'un poids moléculaire dans la plage de 60 à 500 g/mole ; et
le composant de polyisocyanate K2 comprenant
- au moins un polyisocyanate B1 et
- au moins un polymère de polyuréthane B2 présentant des groupes isocyanate ;
le triol A1, le diol A2 et le diol A3 étant présents en une telle quantité, que le rapport pondéral de (Al + A3)/A2 se situe dans la plage de 2,5 à 20, préférablement 3 à 15, en particulier 4 à 10, et le rapport pondéral de A1/A3 se situe dans la plage de 2 à 100, préférablement 3 à 75, en particulier 4 à 50,
où, on désigne en tant que poids moléculaire moyen, le poids moléculaire moyen en nombre Mₙ d'un mélange oligomérique ou polymérique de molécules, qui est habituellement déterminé par CPG par rapport à du polystyrène comme référence.

2. Adhésif de polyuréthane selon la revendication 1, **caractérisé en ce que** le triol A1 est un polyéthertriol.

3. Adhésif de polyuréthane selon l'une quelconque des revendications précédentes, **caractérisé en ce que** le triol A1 présente des groupes hydroxyle primaires.

4. Adhésif de polyuréthane selon l'une quelconque des revendications précédentes, **caractérisé en ce que** le triol A1 présente un poids moléculaire moyen dans la plage de 3 000 à 8 000 g/mole.

5. Adhésif de polyuréthane selon l'une quelconque des revendications précédentes, **caractérisé en ce que** le diol A3 représente un poly(oxyde de triméthylène)diol.

6. Adhésif de polyuréthane selon l'une quelconque des revendications 1 à 4, **caractérisé en ce que** le diol A3 représente un poly(oxyde de tétraméthylène)diol.

7. Adhésif de polyuréthane selon l'une quelconque des revendications précédentes, **caractérisé en ce que** la polyamine PA est choisie dans le groupe constitué par le 1,5-diamino-2-méthylpentane, la 2,2,4-triméthylhexaméthylènediamine et la 2,4,4-triméthylhexaméthylènediamine, la 1,8-octanediamine, la 1,10-décanediamine, la 1,12-dodécanediamine, le 1-amino-3-aminométhyl-3,5,5-triméthylcyclohexane, le 2-méthyl-1,3-diaminocyclohexane et le 4-méthyl-1,3-diaminocyclohexane et des mélanges correspondants, le 1,3-bis-(aminométhyl)cyclohexane, le 1,4-bis-(aminométhyl)cyclohexane, le 2,5(2,6)-bis-(aminométhyl)-bicyclo[2.2.1]heptane, le 3(4),8(9)-bis-(aminométhyl)-tricyclo[5.2.1.0^{2,6}]décane, le bis-(2-aminoéthyl)éther, la 3,6-dioxaoctan-1,8-diamine, la 4,7-dioxadécan-1,10-diamine, la 4,7-dioxadécan-2,9-diamine, la 4,9-dioxadodécan-1,12-diamine, la 5, 8-dioxadodécan-3,10-diamine, le 1,3-bis-(aminométhyl)benzène et le 1,4-bis-(aminométhyl)benzène.

8. Adhésif de polyuréthane selon l'une quelconque des revendications précédentes, **caractérisé en ce que** le polyisocyanate B1 est une forme liquide à température ambiante du 4,4'-diisocyanate de diphénylméthane, du 2,4'-diisocyanate de diphénylméthane ou du 2,2'-diisocyanate de diphénylméthane et de quelconques mélanges de ces isomères (MDI) sous forme de MDI polymérique ou de MDI comportant des parts d'oligomères ou de dérivés.

9. Adhésif de polyuréthane selon l'une quelconque des revendications précédentes, **caractérisé en ce que** le polymère de polyuréthane B2 présentant des groupes isocyanate peut être obtenu par la transformation du 4,4'-diisocyanate de diphénylméthane avec au moins un polyol.

10. Adhésif de polyuréthane selon l'une quelconque des revendications précédentes, **caractérisé en ce que** le rapport de mélange en volume entre le composant de polyol K1 et le composant de polyisocyanate K2 se situe dans la plage de 1:3 et 3:1, préférablement 0,8:1,2.

11. Procédé pour le collage d'un premier substrat avec un deuxième substrat, comprenant les étapes de
- mélange du composant de polyol K1 et du composant de polyisocyanate K2 d'un adhésif de polyuréthane selon l'une quelconque des revendications 1 à 10,
- application de l'adhésif de polyuréthane mélangé sur au moins une des surfaces de substrat devant être collées,
- assemblage des substrats devant être collés pendant le temps ouvert
- durcissement de l'adhésif de polyuréthane.

12. Procédé selon la revendication 11, **caractérisé en ce qu'**un substrat ou les deux substrats sont un métal ou une vitrocéramique ou un verre ou un plastique renforcé par des fibres de verre ou un plastique renforcé par des fibres de carbone ou une résine thermodurcissable à base d'époxy.

13. Article créé à partir du procédé pour le collage selon l'une quelconque des revendications 11 et 12.

14. Procédé pour le décollement induit thermiquement par l'intermédiaire d'une dégradation thermique par l'application d'une température de 120 °C à 200 °C pendant 10 à 50 min, préférablement par l'application d'une température de 150 °C à 160 °C pendant 20 à 40 min et remplacement d'un adhésif de polyuréthane durci selon l'une quelconque des revendications 1 à 10.

15. Utilisation de l'adhésif de polyuréthane selon l'une quelconque des revendications 1 à 10 pour le collage d'un premier substrat et d'un deuxième substrat, au moins le premier substrat représentant un plastique renforcé par des fibres de verre ou un plastique renforcé par des fibres de carbone ou une résine thermodurcissable à base d'époxy ou un mat de fibres minérales vitreuses.
